# EUROPEAN PATENT SPECIFICATION

(11) **EP 1 576 267 B1**
(45) Date of publication and mention of the grant of the patent: **11.02.2009**
(21) Application number: 03781216.1
(22) Date of filing: 17.12.2003
(51) Int. Cl.: F02C 9/16, F02C 7/057

(54) **GAS TURBINE POWER PLANT**
GASTURBINENKRAFTWERK
CENTRALE ELECTRIQUE POUR TURBINE A GAZ

(30) Priority: 23.12.2002 SE 0203883
(43) Date of publication of application: 21.09.2005
(73) Proprietor: Turbec S.p.A., 44040 Corporeno di Cento (FE) (IT)
(72) Inventor: REHN, Johnny, S-266 97 Hjärnarp (SE)
(74) Representative: Karlsson, Leif Gunnar Börje
(86) International application number: PCT/SE2003/001981
(87) International publication number: WO 2004/057170

(56) References cited:
- GB-A- 2 318 832
- US-A- 3 030 943
- US-A- 4 126 110
- US-A- 5 148 670

## Description

### Field of the Invention

The present invention relates to an assembly and a method for preheating inlet air to a gas turbine comprised in a gas turbine power plant for heat and power production.

### Prior Art

The present invention is mainly targeted on solving two different problems that can occur concerning gas turbines for heat and power production at cold weather conditions, namely power control and ice formation.

Controlling the power of a gas turbine can be difficult, since air flow (volume) through the turbine mainly is controlled by the turbine speed. The combustion limits in the combustion chamber restrict the possibilities to "lean out", i.e. to decrease the fuelling level without simultaneously decrease the (mass) flow of air. Since the air volume flow through the turbine is governed by the turbine speed, the only possible way to reduce the air mass flow without changing the turbine speed is to reduce the density of the air. Changing the density can be done in two ways: either throttle the inlet air to decrease the air pressure or increase the air temperature.

GB-A-2 318 832 describes a gas turbine based combined cycle power plant. To reduce fuel consumption under part load conditions in a power plant having a gas turbine exhausting to a heat recovery steam generator supplying a steam turbine, exhaust steam from the steam turbine is passed to a heat exchanger in which water is heated, the water subsequently being passed to a coil to preheat inlet air to the gas turbine. Alternatively, the inlet air may be heated directly by low-pressure steam generated by the gas turbine exhaust. The design according to this patent is not suitable for a power plant designed to utilize heat emanating from cooling for e.g. domestic heating, since some of the heat will be consumed to heat the inlet air of the turbine, instead of being used for e.g. the domestic heating.

Throttling of the inlet airflow (like the throttling used for SI piston engines) is connected with some serious drawbacks:
a. Throttling gives an expansion of the air without the expansion giving useful work. This leads to a decreased efficiency.
b. Throttling leads to a temperature decrease. This might, under some weather conditions, lead to icing of parts downstream the throttle.

Throttling has however got one important benefit: a throttle controlled heat machine has a fast transient response. This benefit is however of little importance for an application as the above, since such devices generally operate at virtually identical loads for extended time periods.

Increasing the temperature can be a more efficient way to reduce the power output of the gas turbine. This is especially the case if the heat required for the temperature increase is "for free". In a gas turbine based heat and power generating system, there are many heat sources that could be used for heating the inlet air. In the following, some examples thereof will be given, accompanied with pros and cons for the respective heat source.

One additional benefit with increasing the temperature is that the temperature increase reduces icing tendencies that are present in the cycle under some weather conditions. The reason for the icing will be described below:

Prior to compressor inlet air induction, the air is filtered to remove particulates that, if they entered the gas turbine, could damage the turbine. In air filters, some pressure drop is inevitable. As mentioned above, a pressure drop leads to a decreasing temperature. The temperature decrease can, for some weather conditions, lead to water crystallisation (i.e. freezing or icing) on devices placed downstream the filter. This problem concerns weather conditions when the temperature is slightly above 0 degrees centigrade, i.e. just over the freezing point.

Inlet air preheating was earlier used for carburetted SI engines, to help overcome icing and vaporising problems during winter.

As implied above, both throttling and preheating have been used earlier for piston engines. It is however not obvious to use preheating for a gas turbine based heat and power generating device, as will be evident in the following.

### Summary of the Invention

The present invention solves the above and other problems by a preheating system for preheating inlet air to a heat and power producing gas turbine/generator system. The gas turbine/generator comprises a compressor, at least one turbine, a recuperator, a generator, a power electronics pack, and at least a first radiator of heat. The inlet air is heated by means of heat generated in auxiliary devices, such as the power electronics pack, the generator and/or other devices radiating heat.

### Brief Description of the Drawings

Fig 1 is a schematic view showing a first embodiment of the present invention.
Fig 2 is a schematic view showing a second embodiment of the present invention.
Fig 3 is a schematic view showing a third embodiment of the present invention.
Fig 4 is a graph showing electrical efficiencies for a gas turbine at various temperatures, using various methods for power control.
Fig 5 is a graph showing total system efficiencies with various power control means.

### Detailed Description of Preferred Embodiments

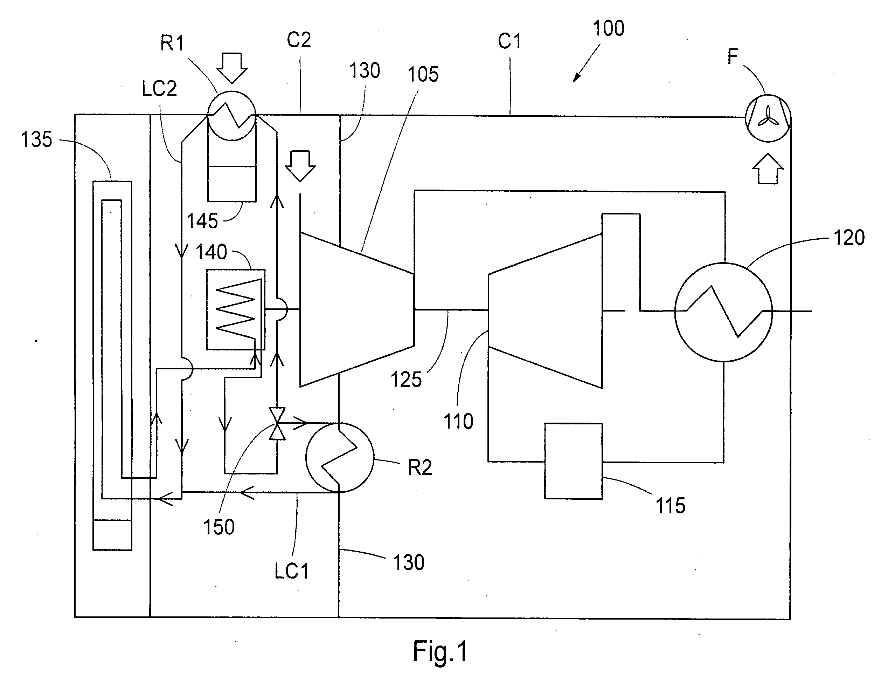

In fig 1, a gas turbine power system is shown. It comprises a compressor 105, a turbine 110, a combustion chamber 115, a recuperator 120 and a fan F. The above units are housed in a generally air sealed compartment C1. The gas turbine system also comprises a second generally air sealed compartment C2, the compartment C2 housing a liquid-cooled electric generator 140, a liquid-cooled power electronics pack 135, a first liquid/air radiator R1 for a secondary cooling liquid circuit LC2, a second liquid/air radiator R2 for a primary cooling liquid circuit LC1, and a three-way control valve 150. The first radiator R1 is placed "upstream" an air filter 145. The second radiator R2 is placed in a through-hole in a wall 130, separating the two compartments C1 and C2.

As is well known by persons skilled in the art, the compressor 105, the turbine 110 and the generator 140 are connected by means of a shaft 125. Furthermore, the turbine can be both a single unit, and a combination of two turbines. The function of the above devices will be explained in the following.

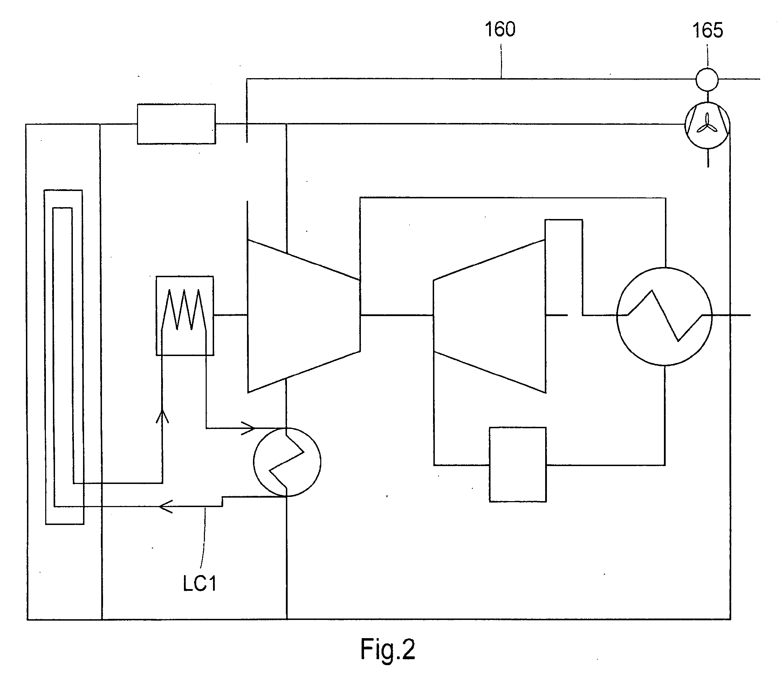

Fig 2 shows a second embodiment of the present invention. For reasons of clarity, components in the system that are identical with the components of fig 1 are not referenced to. The major difference between the embodiments shown in fig 1 and fig 2 is that the second embodiment comprises only a single, primary cooling liquid circuit LC1, whereas the first embodiment comprises both primary and secondary cooling liquid circuits LC1 and LC2. Further, the second embodiment comprises an air conduit 160 leading from an air valve 165 (that is connected to the fan F, which in turn is connected to the first compartment C1), and opening in the second compartment C2.

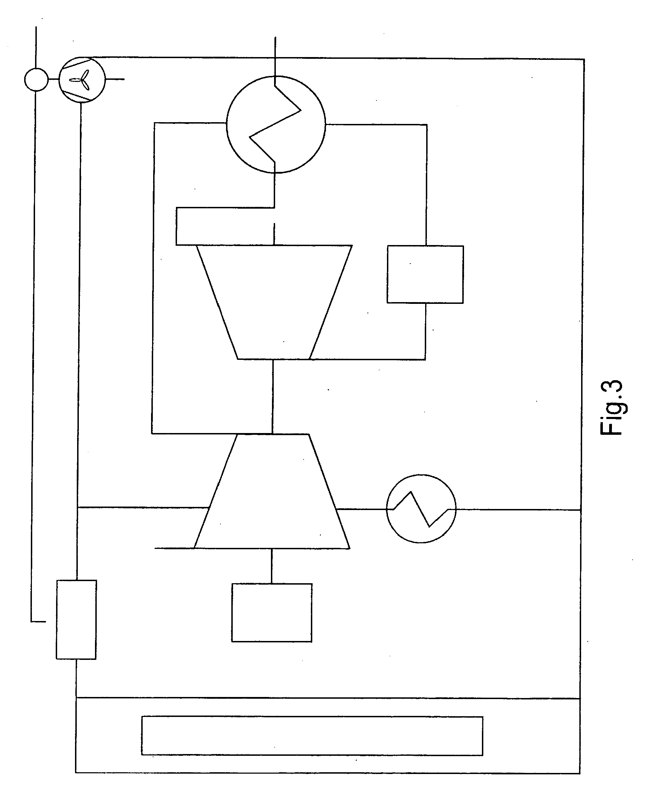

Fig 3 shows a third embodiment of the present invention. This embodiment is identical to the second embodiment, except in that the air conduit 160 opens upstream the filter 145. As will be explained hereinafter, this gives an important advantage compared to the second embodiment in some cases.

In the following, the function of the three embodiments of the present invention will be explained.

As mentioned in the prior art chapter, one major problem with gas turbines running at low temperatures is that the power output increases. There are several possibilities to decrease the output power, e.g. throttling, air bleeding, speed reduction, and combustion chamber temperature reduction. There is however also a third possibility, namely to heat the intake air prior to induction in the compressor. The basic idea with all mentioned ways to reduce the power output (except combustion chamber temperature reduction) is to decrease the amount of air that is delivered to the turbine. In the first embodiment of the present invention, the preheating of the intake air is achieved by using heat produced in the power electronics pack 135 and the generator 140 to preheat the intake air by means of the radiator R1. When no inlet air preheating is necessary, the heat from the power electronics pack 135 and the generator 140 is radiated from the second radiator R2.

As can be seen in fig 1, a cooling liquid in the primary circuit LC1 passes through the power electronics pack 135 and the generator 140, taking up heat that is caused by losses in said devices. After passing the generator 140, the cooling liquid enters the three-way valve 150, that is controlled based on outside temperature. If a control system (not shown) for the valve 150 decides that no inlet air preheating is necessary, the valve is controlled to direct the liquid flow towards the second radiator R2. In that radiator, the heat collected in the power electronics pack 135 and the generator 140 is radiated to air that is drawn from the second compartment C2 to the first compartment C1 by means of the fan F, that causes a lower pressure in the first compartment than in the second compartment.

If the control system decides that it is suitable with air preheating, the valve 150 closes the passage to the radiator R2, and instead leads the liquid flow towards the first radiator R1. In the first radiator R1, the heat collected in the power electronics pack 135 and the generator 140 is radiated to the air that is entering the second compartment C2 (and ultimately the compressor inlet).

For both operational modes, the fan F draws air from the first compartment C1. This causes a lower pressure in the first compartment, which leads to the first compartment drawing air from the second compartment C2, through the second radiator R2. The second compartment "loses" air in two ways, namely in that the first compartment draws in air, and also in that the compressor 105 consumes air. Generally speaking, the compressor consumes about as much air as is drawn from the second compartment C2 to the first compartment C1.

Above, only the two extreme positions of the valve 150 are described. As is evident for a person skilled in the art, it is possible to control the amount of heat that is to be directed to the first and the second radiators R1 and R2, respectively. By doing so, it is possible to control the output power of the gas turbine by controlling the inlet temperature to the compressor.

The first radiator R1 can be provided both upstream and downstream the filter 145. Placing the first radiator R1 upstream the filter is however advantageous in that the filter is prevented from being coated with ice during certain weather conditions. The reason for the icecoating will be explained hereinafter:

As air enters the second compartment C2 from the atmosphere, a pressure drop occurs in the filter 145. As is well known by persons skilled in the art, and as implied above, a pressure drop leads to a temperature decrease. In certain weather conditions, mainly at moistly weather at temperatures just over 0 degrees centigrade, the temperature decrease due to the pressure drop of the air over the filter leads to ice crystals forming in the filter. The formation of ice crystals leads to an even larger pressure drop, which, in turn, leads to even more ice crystal formation. Placing the first radiator upstream the filter makes it possible to avoid the critical temperatures at which ice formation can occur.

The second embodiment differs from the first embodiment in that no secondary cooling liquid circuit LC2 is provided, and hence no first radiator R1. Instead, the inlet air temperature to the compressor is controlled by introducing air that has passed the second radiator R2 in the second compartment C2. In compartment C2, further heat is absorbed by the air, e.g. from the turbine, which leads to an increased temperature. The amount of heated air that is fed into the second compartment C2 is controlled by means of the air valve 160, that is connected to the fan F. The air valve can be controlled within two extreme positions, namely that all heated air from the first compartment C1 enters the second compartment C2, and that all air from the first compartment C1 is vented to the atmosphere.

As is evident for a person skilled in the art, it is possible to control the temperature in the second compartment (and hence the inlet temperature) within the temperature range defined by the two extreme positions of the air valve 165. The second embodiment has got both advantages and disadvantages compared to the first embodiment. On one hand, the temperature of the air that passes the filter 145 can not be controlled. This is disadvantageous compared to the first embodiment, since no de-icing properties can be achieved. On the other hand, the amount of air that passes the filter is reduced, leading to less pressure drop, and hence less icing. The second embodiment can also provide more heat to the air that enters the second compartment C2, compared to the first embodiment.

The third embodiment is very similar to the second embodiment. The only difference is that the air from the first compartment (that, as for the second embodiment, is delivered by means of the fan F, the valve 165, and the air conduit 160) is let out from the air conduit 160 upstream the filter 145. This leads to improved de-icing capability compared to the second embodiment, but, on the other hand, larger pressure drop over the filter.

As is evident from the above description, there are advantages and disadvantages with all three described embodiments.

There are some basic features that are common for the three described embodiments. For example, the available heating power from the power electronics pack and the generator is on the order of 10 kW. This gives a temperature rise of some 15 degrees C. This makes it possible to run a gas turbine at an outdoor temperature of -15 degrees C with the same output as if it was 0 degrees C. In addition to this, the ice formation in the filter decreases for all shown embodiments, although not as much for the second embodiment as for the first and third embodiments.

The second and third embodiments (airborne heating) can provide some 40 kW heat to the incoming air, which gives a temperature rise of some 50 degrees C. Hence, the second and third embodiments are more preferred at locations where very low temperatures (down to -50 degrees C) can be expected.

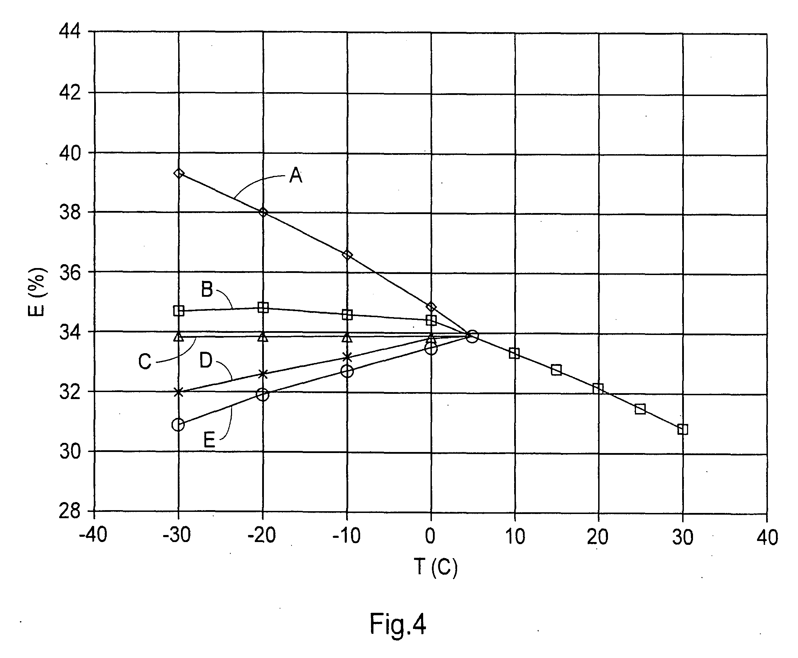

Figure 4 shows gas a turbine electrical efficiency E (vertical axis) vs. ambient temperature T (horizontal axis) for five various ways of controlling output power. Note that the efficiency means the thermal efficiency, i.e. the electrical power output vs. the amount of energy supplied to the system in form of fuel. Below is a list of the five various control methods:
A. Speed reduction, i.e. reducing the rotational speed of the compressor, the turbine and the generator.
B. Full power mode, i.e. no power control.
C. Inlet air preheating, i.e. the subject of this patent application.
D. Throttling, i.e. to reduce the inlet pressure to the compressor.
E. Fuel reduction, i.e. to reduce the amount of fuel that is let into the combustion chamber.

As is evident from figure 4, the best way, from an efficiency point of view, to reduce power output is to reduce the rotational speed of the compressor, the turbine, and the generator. Unfortunately, this method also decreases the total output, which renders the method unsuitable for this special application. The full power and the inlet preheating methods are rather similar in terms of efficiency, whereas throttling and fuel reduction are suffering from larger efficiency losses.

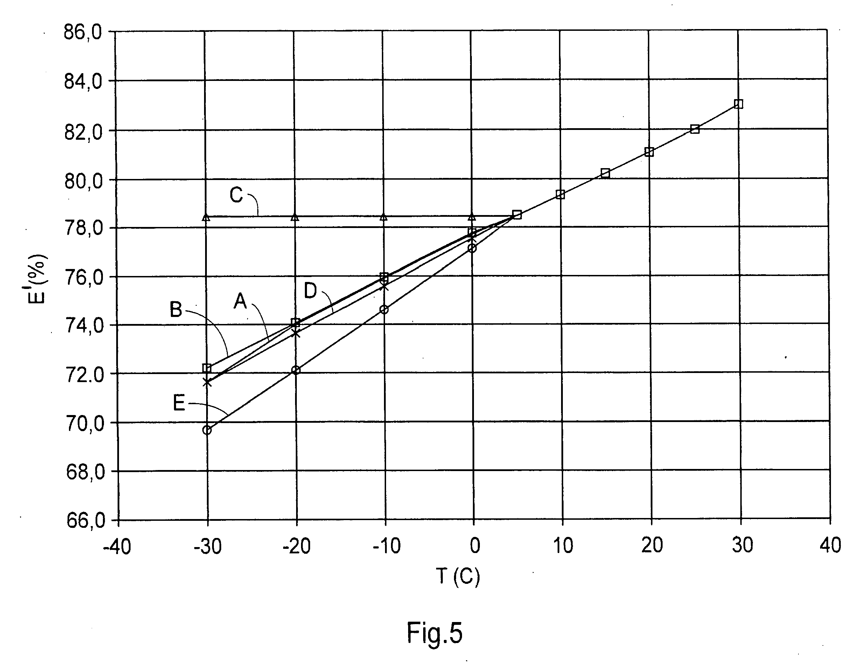

Figure 5 shows the total system efficiency E' for the same five control methods as shown in figure 4, denoted with like reference numerals. Total efficiency means in this case both heat and electrical power.

For the total efficiency, the method of using inlet air preheating is superior to all the other control methods. As can be seen, the total efficiency decreases for all other control methods as the ambient temperature decreases, whereas the total efficiency is constant for the method of preheating inlet air, for temperatures lower than 5 degrees C.

## Claims

1. A heat and power producing gas turbine/generator assembly (100) including a system for preheating inlet air to the heat and power producing gas turbine/generator assembly (100), said assembly comprising a compressor (105), at least one turbine (110), a recuperator (120), a generator (140), and a power electronics pack (135), the system being **characterised by**
heat transfer means (LC1, LC2, R1, R2) for transferring heat from a power electronics pack (135) and/or a generator (140) of said turbine/generator assembly (100) to inlet air of said turbine/generator assembly (100).

2. The heat and power producing gas turbine/generator assembly (100) according to claim 1, wherein the means (LC1, LC2, R1, R2) for transferring heat comprises a cooling liquid circuit (LC1, LC2), said circuit receiving heat from the power electronics pack (135) and/or the generator (140), and a radiator (R1) where heat is delivered to the inlet air of said assembly (100), said heat being transferred from the power electronics pack (135) and/or the generator (140) through said circuit (LC1, LC2).

3. The heat and power producing gas turbine/generator assembly (100) according to claim 1 or 2, wherein at least an inlet of the compressor (105) is placed in a second compartment (C2), and other components are placed in a first compartment (C1).

4. The heat and power producing gas turbine/generator assembly (100) according to any of the claims 1 to 2, wherein the power electronics pack (135) is liquid-cooled.

5. The heat and power producing gas turbine/generator assembly (100) according to any of the preceding claims, wherein the generator (140) is liquid-cooled.

6. The heat and power producing gas turbine/generator assembly (100) according to any of the preceding claims, wherein the first air/liquid radiator (R1), that radiates heat to the incoming air, is provided upstream the compressor (105).

7. The heat and power producing gas turbine/generator assembly (100) according to claim 6, wherein the first radiator (R1) is provided upstream a filter (145)

8. The heat and power producing gas turbine/generator assembly (100) according to any of the preceding claims, wherein a control valve (150) controls the amount of heat that is added to the first radiator (R1) and a second radiator (R2), respectively.

9. The heat and power producing gas turbine/generator assembly (100) according to any of the preceding claims, wherein heat is conveyed to the second compartment (C2) by means of an air conduit (160) leading from the first compartment (C1) to the second compartment (C2).

10. The heat and power producing gas turbine/generator assembly (100) according to claim 9, wherein the air conduit is connected to a fan (F) that conveys heated air from the first compartment (C1) to the second compartment (C2).

11. The heat and power producing gas turbine/generator assembly (100) according to any of the claims 9-10, wherein the air from the first compartment (C1) passes the filter (145) prior to entering the second compartment (C2).

12. The heat and power producing gas turbine/generator assembly (100) according to any of the claims 9-11, wherein an air control valve (165) controls the amount of heated air from the first compartment (C1) that is let into the second compartment (C2), and how much of the heated air that is vented to the atmosphere.

13. A method for decreasing power output from a heat and power producing gas turbine/generator assembly (100), said assembly comprising a compressor (105), at least one turbine (110), a recuperator (120), a generator (140), a power electronics pack (135), and at least a first radiator (R1), the method being **characterised in that** excess heat from a generator (140) and/or a power electronics pack (135) of the assembly (100) is used to heat inlet air to the gas turbine/generator assembly (100) in order to decrease the density of the inducted air.

14. The method according to claim 13, wherein heat is conveyed from the power electronics pack (135) and/or the generator (140) to the air that is inducted by the gas turbine/generator assembly (100) by means of a cooling liquid circuit (LC1).

15. The method according to claim 13, wherein heat is conveyed from the power electronics pack (135) and/or the generator (140) to the air that is inducted by the gas turbine/generator assembly (100) by means of an air conduit from a first compartment (C1) to a second compartment (C2).

16. A gas turbine/generator assembly (100) having a system for preheating the inlet air to the assembly according to any of claims 1-12.

## Patentansprüche

1. Wärme und Energie erzeugende Gasturbinen/Generatoranordnung (100), die ein System zum Vorheizen von Einlassluft zur Wärme und Energie erzeugenden Gasturbinen/Generatoranordnung (100) einschließt, welche Anordnung einen Kompressor (105), wenigstens eine Turbine (110), einen Rekuperator (120), einen Generator (140) und ein Leistungselektronikpaket (135) aufweist, welches System **gekennzeichnet ist durch**:
Wärmeübertragungsmittel (LC1, LC2, R1, R2) zum Übertragen von Wärme von einem Leistungselektronikpaket (135) und/oder einem Generator (140) der Turbinen/Generatoranordnung (100) zu Einlassluft der Turbinen/Generatoranordnung (100).

2. Wärme und Energie erzeugende Gasturbinen/Generatoranordnung (100) nach Anspruch 1, bei der die Mittel (LC1, LC2, R1, R2) zum Übertragen von Wärme einen Kühlflüssigkeitsleitungskreis (LC1, LC2), welcher Leitungskreis Wärme von dem Leistungselektronikpaket (135) und/oder dem Generator (140) empfängt, und einen Radiator (R1) aufweisen, wo Wärme zur Einlassluft der Anordnung (100) geliefert wird, welche Wärme von dem Leistungselektronikpaket (135) und/oder dem Generator (140) durch den Leitungskreis (LC1, LC2) übertragen wird.

3. Wärme und Energie erzeugende Gasturbinen/Generatoranordnung (100) nach Anspruch 1 oder 2, bei der wenigstens ein Einlass des Kompressors (105) in einem zweiten Abteil (C2) angeordnet ist und andere Komponenten in einem ersten Abteil (C1) angeordnet sind.

4. Wärme und Energie erzeugende Gasturbinen/Generatoranordnung (100) nach einem der Ansprüche 1 bis 2, bei der das Leistungselektronikpaket (135) flüssigkeitsgekühlt ist.

5. Wärme und Energie erzeugende Gasturbinen/Generatoranordnung (100) nach einem der vorangehenden Ansprüche, bei der der Generator (140) flüssigkeitsgekühlt ist.

6. Wärme und Energie erzeugende Gasturbinen/Generatoranordnung (100) nach einem der vorangehenden Ansprüche, bei der der erste Luft/Flüssigkeitsradiator (R1), der Wärme in die ankommende Luft strahlt, stromauf vom Kompressor (105) vorgesehen ist.

7. Wärme und Energie erzeugende Gasturbinen/Generatoranordnung (100) nach Anspruch 6, bei der der erste Radiator (R1) stromauf von einem Filter (145) vorgesehen ist.

8. Wärme und Energie erzeugende Gasturbinen/Generatoranordnung (100) nach einem der vorangehenden Ansprüche, bei der ein Steuerventil (150) die Wärmemenge steuert, die einem ersten Radiator (R1) bzw. einem zweiten Radiator (R2) hinzugefügt wird.

9. Wärme und Energie erzeugende Gasturbinen/Generatoranordnung (100) nach einem der vorangehenden Ansprüche, bei der Wärme zum zweiten Abteil (C2) mit Hilfe einer Luftleitung (160) befördert wird, die vom ersten Abteil (C1) zum zweiten Abteil (C2) führt.

10. Wärme und Energie erzeugende Gasturbinen/Generatoranordnung (100) nach Anspruch 9, bei der die Luftleitung mit einem Gebläse (F) verbunden ist, dass erwärmte Luft vom ersten Abteil (C1) zum zweiten Abteil (C2) befördert.

11. Wärme und Energie erzeugende Gasturbinen/Generatoranordnung (100) nach einem der Ansprüche 9 bis 10, bei der die Luft von dem ersten Abteil (C1) durch den Filter (145) vor Eintritt in den zweiten Abschnitt oder das zweite Fach (C2) hindurchgeht.

12. Wärme und Energie erzeugende Gasturbinen/Generatoranordnung (100) nach einem der Ansprüche 9 bis 11, bei der ein Luftsteuerventil (165) die Menge von erwärmter Luft vom ersten Abteil (C1) steuert, die in das zweite Abteil (C2) eingelassen wird, und wie viel der erwärmten Luft in die Atmosphäre entlüftet wird.

13. Verfahren zum Verringern der Leistungsabgabe von einer Wärme und Energie erzeugenden Gasturbinen/Generatoranordnung (100), welche Anordnung einen Kompressor (105), wenigstens eine Turbine (110), einen Rekuperator (120), einen Generator (140), ein Leistungselektronikpaket (135) und wenigstens einen ersten Radiator (R1) aufweist, welches Verfahren **dadurch gekennzeichnet ist, dass** überschüssige Wärme von einem Generator (140) und/oder einem Leistungselektronikpaket (135) der Anordnung (100) dazu verwendet wird, Einlassluft zu der Gasturbinen/Generatoranordnung (100) zu erwärmen, um die Dichte der eingeführten Luft zu verringern.

14. Verfahren nach Anspruch 13, bei dem Wärme von dem Leistungselektronikpaket (135) und/oder dem Generator (140) der Luft zugeführt wird, die durch die Gasturbinen/Generatoranordnung (100) mit Hilfe eines Kühlflüssigkeitsleitungskreises (LC1) eingeführt wird.

15. Verfahren nach Anspruch 13, bei dem Wärme von dem Leistungselektronikpaket (135) und/oder dem Generator (140) zu der Luft befördert wird, die durch die Gasturbinen/Generatoranordnung (100) mit Hilfe einer Luftleitung von dem ersten Abteil (C1) zu einem zweiten Abteil (C2) eingesogen wird.

16. Gasturbinen/Generatoranordnung (100), das ein System zum Vorheizen von Einlassluft zur Anordnung nach einem der Ansprüche 1 bis 12 hat.

## Revendications

1. Ensemble turbine à gaz/générateur produisant de la chaleur et de l'énergie (100) incluant un système pour préchauffer l'air d'entrée de l'ensemble turbine à gaz/générateur produisant de la chaleur et de l'énergie (100), ledit ensemble comprenant un compresseur (105), au moins une turbine (110), un récupérateur (120), un générateur (140), et un bloc électronique de puissance (135), le système étant **caractérisé par**
un moyen de transfert de chaleur (LC1, LC2, R1, R2) pour transférer de la chaleur provenant d'un bloc électronique de puissance (135) et/ou d'un générateur (140) dudit ensemble turbine à gaz/générateur (100) vers l'air d'entrée dudit ensemble turbine à gaz/générateur (100).

2. Ensemble turbine à gaz/générateur produisant de la chaleur et de l'énergie (100) selon la revendication 1, dans lequel le moyen (LC1, LC2, R1, R2) pour transférer de la chaleur comprend un circuit de liquide de refroidissement (LC1, LC2), ledit circuit recevant de la chaleur provenant dudit bloc électronique de puissance (135) et/ou dudit générateur (140), et un radiateur (R1) où de la chaleur est fournie à l'air d'entrée dudit ensemble (100), ladite chaleur étant transférée du bloc électronique de puissance (135) et/ou du générateur (140) par l'intermédiaire dudit circuit (LC1, LC2).

3. Ensemble turbine à gaz/générateur produisant de la chaleur et de l'énergie (100) selon la revendication 1 ou 2, dans lequel au moins une entrée du compresseur (105) est placée dans un deuxième compartiment (C2), et les autres composants sont placés dans un premier compartiment (C1).

4. Ensemble turbine à gaz/générateur produisant de la chaleur et de l'énergie (100) selon l'une quelconque des revendications 1 à 2, dans lequel le bloc électronique de puissance (135) est refroidi par liquide.

5. Ensemble turbine à gaz/générateur produisant de la chaleur et de l'énergie (100) selon l'une quelconque des revendications précédentes, dans lequel le générateur (140) est refroidi par liquide.

6. Ensemble turbine à gaz/générateur produisant de la chaleur et de l'énergie (100) selon l'une quelconque des revendications précédentes, dans lequel le premier radiateur air/liquide (R1), qui rayonne de la chaleur vers l'air entrant, est prévu en amont du compresseur (105).

7. Ensemble turbine à gaz/générateur produisant de la chaleur et de l'énergie (100) selon la revendication 6, dans lequel le premier radiateur (R1) est prévu en amont d'un filtre (145).

8. Ensemble turbine à gaz/générateur produisant de la chaleur et de l'énergie (100) selon l'une quelconque des revendications précédentes, dans lequel une soupape de commande (150) commande la quantité de chaleur qui est ajoutée au premier radiateur (R1) et à un deuxième radiateur (R2), respectivement.

9. Ensemble turbine à gaz/générateur produisant de la chaleur et de l'énergie (100) selon l'une quelconque des revendications précédentes, dans lequel la chaleur est transportée jusqu'au deuxième compartiment (C2) au moyen d'une conduite d'air (160) menant du premier compartiment (C1) jusqu'au deuxième compartiment (C2).

10. Ensemble turbine à gaz/générateur produisant de la chaleur et de l'énergie (100) selon la revendication 9, dans lequel la conduite d'air est connectée à un ventilateur (F) qui transporte l'air chauffé du premier compartiment (C1) jusqu'au deuxième compartiment (C2).

11. Ensemble turbine à gaz/générateur produisant de la chaleur et de l'énergie (100) selon l'une quelconque des revendications 9 à 10, dans lequel l'air provenant du premier compartiment (C1) passe par le filtre (145) avant de pénétrer dans le deuxième compartiment (C2).

12. Ensemble turbine à gaz/générateur produisant de la chaleur et de l'énergie (100) selon l'une quelconque des revendications 9 à 11, dans lequel une soupape de commande d'air (165) commande la quantité d'air chauffé provenant du premier compartiment (C1) qui est conduite dans le deuxième compartiment (C2), et la quantité de l'air chauffé qui est relâchée dans l'atmosphère.

13. Procédé pour diminuer l'énergie de sortie d'un ensemble turbine à gaz/générateur produisant de la chaleur et de l'énergie (100), ledit ensemble comprenant un compresseur (105), au moins une turbine (110), un récupérateur (120), un générateur (140), un bloc électronique de puissance (135), et au moins un premier radiateur (R1), le procédé étant **caractérisé en ce que** la chaleur en excès provenant d'un générateur (140) et/ou d'un bloc électronique de puissance (135) de l'ensemble (100) est utilisée pour chauffer l'air d'entrée de l'ensemble turbine à gaz/générateur (100) afin de diminuer la densité de l'air induit.

14. Procédé selon la revendication 13, dans lequel la chaleur est transportée du bloc électronique de puissance (135) et/ou du générateur (140) jusqu'à l'air qui est induit par l'ensemble turbine à gaz/générateur (100) au moyen d'un circuit de liquide de refroidissement (LC1).

15. Procédé selon la revendication 13, dans lequel la chaleur est transportée du bloc électronique de puissance (135) et/ou du générateur (140) jusqu'à l'air qui est induit par l'ensemble turbine à gaz/générateur (100) au moyen d'une conduite d'air d'un premier compartiment (C1) jusqu'à un deuxième compartiment (C2).

16. Ensemble turbine à gaz/générateur (100) ayant un système pour préchauffer l'air d'entrée de l'ensemble selon l'une quelconque des revendications 1 à 12.
